# EUROPEAN PATENT SPECIFICATION

(11) **EP 0 728 955 B1**
(45) Date of publication and mention of the grant of the patent: **07.08.2002**
(21) Application number: 95301250.7
(22) Date of filing: 27.02.1995
(51) Int. Cl.: F16C 17/12

(54) **A foil journal bearing having straight foils useful for providing support for high speed rotors and a process for fabricating said bearing**
Folienlager mit geraden Folien zur Lagerung schnelllaufender Rotoren und Verfahren zur Herstellung solcher Lager
Palier à feuilles rectilignes pouvant supporter des rotors tournant à grande vitesse et procédé de fabrication d'un tel palier

(43) Date of publication of application: 28.08.1996
(73) Proprietor: Council of Scientific and Industrial Research, New Delhi 110 001 (IN)
(72) Inventor: Rao, Ramamurthy Sundar Raja, Bangalore 560017 (IN); Vijayaraghavan, Rangarajan, Bangalore 560017 (IN); Siddananjappa, Siddalingappa, Bangalore 560017 (IN); Vysamurthy, Arun Kumar, Bangalore 560017 (IN)
(74) Representative: Carpmael, John William Maurice

(56) References cited:
- EP-A- 0 068 387
- DE-A- 2 741 368
- DE-A- 2 838 768
- FR-A- 2 146 845
- FR-A- 2 352 985
- GB-A- 1 066 645
- US-A- 4 195 395

## Description

This invention relates to a foil air journal bearing having straight foils useful for providing support for high speed rotors. The present invention also provides a process for the fabrication of the above said foil bearing. Foil bearing is an aerodynamic self-acting bearing which generates its own load supporting air film from the rotation of the shaft itself. It requires no external pressurisation but utilises the freely available ambient air. Foil air bearing is becoming a natural choice in high speed machineries such as turbo machines, cryogenic machines and textile machines in recent years because of its long life, reliability and its attractive weight reduction. The mean time between failures (MTBF) is considerably increased when other conventional bearings are replaced by foil bearings. Because of the several advantages of such bearings, significant activity in the field of foil bearings started in mid-1970's. A bearing in accordance with the preamble of claim 1 is known by US-A-4 195 395. Langlois, W.E. (Finite width foil bearing with light loading. J.Appl. Mech. Trans. ASME, V 42, Ser E, n2, June 1975, 274-278) has illustrated a procedure for computing the deflection of foil bearing using Reynolds equation. Bartz, W.J. (Fundamentals of the foil bearing. Inst. Fuer Erdoelforsch, Hannover, Ger Forsch Ingenieuriwes V 41, n 3, 1975, 69-80) developed the basic equations for bump type bearing using Reynolds equation and foil balance equation. Oh and Rohde (Theoretical investigation of the multi-leaf journal bearing. ASME J. of Applied Mechanics, June 1986, 237-242) in their investigations of multileaf bearing have used finite element method to solve the two dimensional compressible Reynolds equation which governs the fluid flow between the journal surface and the multileaves. The solution of the Reynolds equation is coupled with the load-deflection equations to obtain lift-off speed and minimum film thickness. Bending dominated foil bearing has been analysed by Nagaraj and Nelson (An analysis of gas lubricated foil journal bearings. Tribology Trans. Vol. 35, 1992, n 1, 1-10) using elasto-hydrodynamic principles. The compressible Reynolds equation, which is a non-linear equation is numerically solved by finite difference method alongwith the elasticity equation of foil surface by an iterative scheme. Hener and Collins (Complaint foil gas lubricated bearings. AD-768454 AIRESEARCH-73-320269, AFAPL-TR-73-56, 1973) demonstrated the feasibility of foil bearing to a gas turbine environment. Cundiff (Pneumo-mechanical critical speed control for gas turbine engine shaft. AD-772805 MTI-73 TR42 AFAPL-TR-73-101, 1973) used foil bearings to reduce the inner spool vibrations in a small gas turbine engine. Walowitt (Gas lubricated foil bearing technology development for propulsion and power systems. AD-774024 MTI-73 TR 37 AFAPL-TR-73-92, 1973) investigated the suitability of these bearings for propulsion and power systems and also identified the potential coating materials. Koepse (Gas lubricated foil bearing development for advanced turbo-machines. VOL.1, technical discussion, AD-A042980 AIRESEARCH-76-312202-1, AFAPL-TR-76-114 V 1, 1976) presented a design of gas lubricated foil journal and thrust bearings for applications in 13300 N thrust propulsion engine. Bhushan (Self alignment systems for heavily loaded, compliant, hydrodynamic air bearings, ASLE Trans. V 24, n 2, April 1981, 247-256) developed self alignment systems for heavily loaded foil air bearing and evaluated its performance at speeds of the order of 35000 rpm in ambient air. Heshmat (Development of foil journal bearings for high load capacity and high speed whirl stability, J. Lub tech, Trans ASME, Vol. 104, n 2, April 1982, 149-156) has demonstrated the whirl stability at high speeds and also demonstrated the high load capacity of foil bearing. S. Ramamurthy (An experimental parametric study on foil bearing. Proc. IX National Conference on Industrial Tribology, CMTI, Bangalore, Feb. 91, 91-97), has studied the effect of thickness of foil, the effect of orientation angle of foil with respect to Load line and the effect of initial foil clearance on the bearing performance. Ramamurthy (Frictional torque measurement in foil bearing-A simple experimental technique. Proc.X National Conference on Industrial Tribology, IIP, Dehradun, Mar 93, 66-71, Recent advances in TRIBOLOGY Tata McGraw-Hill 1993), has evaluated the frictional torque in foil air bearings using the coast-down phenomenon. The aerodynamic drag of the turbines is also considered while evaluating the frictional torque.

Earlier work on foil bearings reveals that the foils are bent and one of the ends of foils are fixed rigidly to the housing either by welding or by means of fixtures, such as bolts and nuts alongwith the spring washers. These methods of fixing the foils have the disadvantage that the foils may become loose due to the vibrations transmitted during the high speed rotation of the rotor. Further, the bent foils require special dies for their manufacture. Different shapes of foils are described in the literature. The foil bearings with pre-formed radius have good load carrying capacity. Such bearings are suitable for shaft diameters greater than 25 mm diameter. For small diameter bearings, pre-formed radius foils are difficult to manufacture and assemble. Further, the process of making preformed or bent foils involve the design and development of dies, which are costly and time consuming.

Therefore, the main objective of the present invention is to provide a foil bearing and a process for the fabrication of the bearing, both of which are very simple.

According to one aspect of the present invention, we provide a foil bearing for providing support for a high speed rotor and which comprises an outer holder enclosing an inner holder which has a plurality of slots for supporting a plurality of flexible foils, which is characterised by the features of the second part of claim 1.

According to another aspect of the invention, we provide a process for the fabrication of said foil bearing in accordance with claim 6.

Preferably, the inner and outer holders are made of mild steel or metal alloys which can withstand high temperatures and the inner holder contains eight straight foils.

The invention is described by way of example with reference to the accompanying drawings, in which:
- Fig. 1: is a cross sectional end view of the foil bearing of the invention;
- Fig. 2: shows a manner in which the foil bearing having eight straight foils of the present invention is fabricated;
- Fig. 2(a): shows one end of the outer holder which supports the inner holder when assembled therewith;
- Fig. 2(b): shows one end of the inner holder;
- Fig. 2(c): is a front elevation of the inner holder having slots;
- Fig. 2(d): shows the cross section of the inner holder with straight foils fixed in position;
- Fig. 2(e): is a front elevation showing the assembly of inner holder within the outer holder; and
- Fig. 2(f): is a cross section showing the final assembly of the invention.

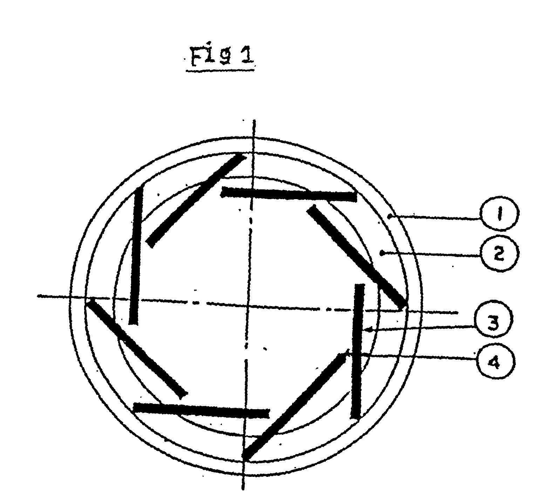

It is apparent from Fig. 1 that the assembly of foil bearing consists of an outer holder (1) and an inner holder (2) which accommodates straight foils (3). The tips (4) of these foils support a high speed rotor.

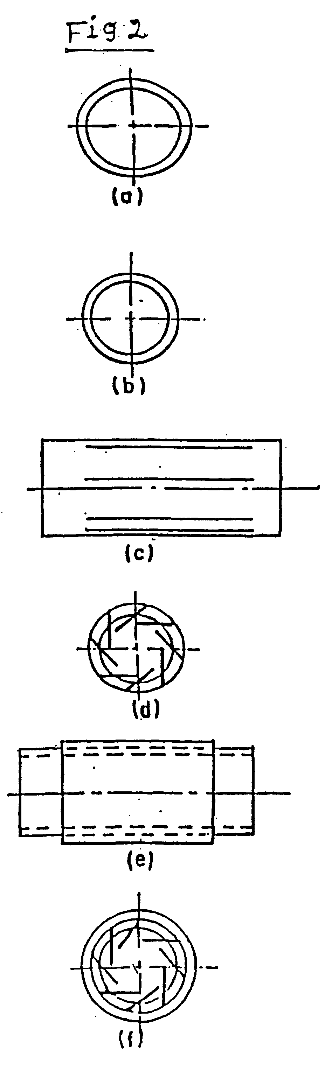

Fig. 2 represents the procedure for the fabrication of the foil bearing of the present invention with a particular attention of the foil bearing having eight straight foils.

As can be seen from Figs. 2(a) and 2(b), the outer holder (1) supports the inner holder (2) when assembled. As can be seen from Fig. 2(c) the inner holder (2) is provided with slots (5) cut to accommodate the straight foils (3) in them. Fig. 2(d) represents the cross section of the holder with the eight straight foils (3) fixed in position. Fig. 2(e) represents the assembly of inner holder (2) (with foils) inside the outer holder (1). Fig. 2(f) represents the cross section of the final assembly of the foil bearing.

As shown in the drawings, one embodiment of the invention provides a foil bearing having eight straight foils useful for providing support for a high speed rotor which comprises an outer holder (1) enclosing an inner holder (2), inner holder being provided with a plurality of slots for straight flexible foils (3), one end of said straight foils being fixed in the corresponding slot of the inner holder (2), the other end (4) being kept free, so as to support the rotor of a machine when the bearing is fixed in the machine.

The inner holder may contain any number of straight foils as per the requirements. However, in a preferred embodiment of the invention, the inner holder may have eight straight foils. The foils may be made of Be-Cu alloy or any other similar alloy having elastic properties and which will withstand high temperatures. The outer holder (1) may be made of mild steel and the inner holder may be made of brass.

According to another feature of the invention, there is a procedure or process for the fabrication of a foil bearing having straight foils, said bearing comprising an outer holder (1) enclosing an inner holder (2), inner holder being provided with a plurality of slots for straight flexible foils (3), one end of which is fixed in the corresponding slot of the inner holder (2) the other end (4) being kept free, so as to support the rotor of a machine when the bearing is fixed in the machine, said process comprising the steps defined in claim 6.

The functioning of the straight foil bearing of the present invention is provided in detail with particular reference to a textile machinery. This is given as an example and it should not be construed to limit the scope of the invention.

The hydrodynamic fluid film which supports the rotor and separates it from the foil is created by the viscous or shear forces acting on the fluid. The rotating shaft drags the boundary layer of fluid with it as it rotates over the bearing surface i.e., the foil. This boundary layer further drags the layer of air immediately adjacent and in this way, a velocity gradient is established in the gap between the shaft surface and foil surface. This gap is wedge shaped. This pressure of air drawn into the wedge shaped gap creates a pressurised cushion of air film which supports the rotating shaft. The rotor in the bearing will be in contact with the foils only during starts and stops. After the rotor reaches the lift-off speed, the rotor is completely air-borne and hence the wear rate is minimum.

The self-pressurisation nature of the foil bearing obviates the need of any external pressurisation. Thus, the foil bearing of the present invention offers the potential advantages of a high speed, minimum wear rate and long reliable operation.

### ADVANTAGES OF THE STRAIGHT FOIL JOURNAL BEARING OF THE PRESENT INVENTION

1. The fabrication involved in making this bearing is extremely simple in nature and does not require any fasteners or nuts or bolts nor any processes like welding.
2. Like any other foil bearing, this bearing requires no lubrication, other than the ambient air or process fluid.
3. Since no external lubrication system is necessary, this bearing is a light weight system - an essential requirement for aerospace applications.
4. The bearing can withstand high temperatures.
5. The bearing is dust tolerant.
6. Inherent property to align itself (because of compliance of foils) and hence small misalignment of shaft is taken care of.

The bearing fabricated according to the invention has been operated at 36,000 rpm and the operation has been found to be smooth and without excessive vibrations. The bearing can replace a roller bearing of textile spindles which presently has the speed limitation of 20,000 rpm. Since the roller bearing generates noise at speeds greater than 20,000 rpm and gets heated up, this foil bearing of the present invention can replace very efficiently the existing rolling element bearing in a textile spindle.

## Claims

1. A foil journal bearing for providing support for a high speed rotor, said bearing comprising an outer holder (1) enclosing an inner holder (2) which has a plurality of slots supporting a plurality of flexible foils (3) for providing the support of the high speed rotor, **characterised in that** each of said flexible foils is straight over its entire length and **in that** one end of each of said straight flexible foils (3) is secured directly within a respective one of the plurality of slots (5), which are arranged at inclined angles so as to extend in the plane of the respective straight foil, the other end of each of said straight flexible foils (3) being left free (4) so as to support the rotor of a machine when the bearing is fixed to the machine.

2. A foil journal bearing as claimed in claim 1 wherein the inner holder (2) contains eight straight foils (3).

3. A foil journal bearing as claimed in claim 1 or 2 wherein the inner and outer holders are made of mild steel or metal alloys which can withstand high temperatures.

4. A foil journal bearing as claimed in claim 1, 2 or 3 wherein the straight foils are made up of any alloy which is flexible and can withstand high temperatures.

5. A foil journal bearing as claimed in claim 4 wherein the foils are made of Be-Cu alloy.

6. A process for the fabrication of a foil journal bearing for providing support for a high speed rotor, which comprises:
a. making an inner holder (2) and an outer holder (1) to the required size;
b. forming slots (5) on the inner holder (2) depending on the number of foils (3) to be incorporated in the holder (2), the slots (5) being inclined with respect to a respective radial direction;
c. inserting one end of a flexible foil (3) which remains straight over its entire length directly into a respective slot (5) the other end of said straight flexible foil (3) being left free (4) so as to support the rotor of a machine when the bearing is fixed to a machine;
d. heating the outer holder (1) and encapsulating the inner holder (2) along with the straight foils within the heated outer holder (1);
e. applying the pressure resulting from step (d) above to the assembly; and
f. cutting the edges of the assembly to the required size.

7. A process as claimed in claim 6 wherein the inner and outer holders are made of mild steel or metal alloys which can withstand high temperatures and the inner holder contains eight straight foils.

## Patentansprüche

1. Folienradiallager zur Bereitstellung eines Halts für einen schnellaufenden Rotor, wobei das Lager eine äußere Haltevorrichtung (1) aufweist, die eine innere Haltevorrichtung (2) umschließt, die mehrere Schlitze aufweist, die mehrere flexible Folien (3) zur Bereitstellung des Halts des schnellaufenden Rotors aufweisen, **dadurch gekennzeichnet, daß** jede der flexiblen Folien über ihre gesamte Länge gerade ist und daß ein Ende jeder der geraden flexiblen Folien (3) direkt in einem jeweiligen der mehreren Schlitze (5) befestigt ist, die unter schiefen Winkeln angeordnet sind, so daß sie sich in der Ebene der jeweiligen geraden Folie erstrecken, wobei das andere Ende (4) jeder der geraden flexiblen Folien (3) lose gelassen wird, um den Rotor einer Maschine zu halten, wenn das Lager an der Maschine befestigt ist.

2. Folienradiallager nach Anspruch 1, wobei die innere Haltevorrichtung (2) acht gerade Folien (3) enthält.

3. Folienradiallager nach Anspruch 1 oder 2, wobei die inneren und äußeren Haltevorrichtungen aus weichem unlegierten Stahl oder Metallegierungen bestehen, die hohen Temperaturen standhalten können.

4. Folienradiallager nach Anspruch 1, 2 oder 3, wobei die geraden Folien aus irgendeiner Legierung bestehen, die flexibel ist und hohen Temperaturen standhalten kann.

5. Folienradiallager nach Anspruch 4, wobei die Folien aus einer Be-Cu-Legierung bestehen.

6. Verfahren zur Herstellung eines Folienradiallagers zur Bereitstellung eines Halts für einen schnellaufenden Rotor, das aufweist:
a. Herstellen einer innere Haltevorrichtung (2) und einer äußeren Haltevorrichtung (1) mit der erforderlichen Größe;
b. Bilden von Schlitzen (5) an der inneren Haltevorrichtung (2) abhängig von der Anzahl von Folien (3), die in die Haltevorrichtung (2) eingebaut werden sollen, wobei die Schlitze (5) bezüglich einer jeweiligen Radialrichtung geneigt sind;
c. Einfügen eines Endes einer flexiblen Folie (3), die über ihre gesamte Länge gerade bleibt, direkt in einen jeweiligen Schlitz (5), wobei das andere Ende (4) der geraden flexible Folie (3) lose gelassen wird, so daß es den Rotor einer Maschine hält, wenn das Lager an einer Maschine befestigt wird;
d. Erwärmen der äußere Haltevorrichtung (1) und Einkapseln der inneren Haltevorrichtung (2) zusammen mit den geraden Folien innerhalb der erwärmten äußeren Haltevorrichtung (1);
e. Ausüben des Druckes, der vom vorhergehenden Schritt (d) herrührt, auf den Aufbau, und
f. Schneiden der Kanten des Aufbaus auf die erforderliche Größe.

7. Verfahren nach Anspruch 6, wobei die inneren und äußeren Haltevorrichtungen aus weichem unlegierten Stahl oder Metallegierungen bestehen, die hohen Temperaturen standhalten können, und die innere Haltevorrichtung acht gerade Folien enthält.

## Revendications

1. Palier à feuilles pouvant supporter un rotor tournant à grande vitesse, ledit palier comprenant un support externe (1) renfermant un support interne (2) ayant une pluralité de fentes supportant une pluralité de feuilles flexibles (3) assurant le soutien du rotor à grande vitesse, **caractérisé en ce que** chacune desdites feuilles flexibles est rectiligne sur sa longueur complète et **en ce qu'**une extrémité de chacune desdites feuilles flexibles rectilignes (3) est directement fixée dans une fente respective de plusieurs fentes (5), qui sont disposées à des angles inclinés afin de s'étendre dans le plan de la feuille rectiligne respective, l'autre extrémité de chacune desdites feuilles flexibles rectilignes (3) étant laissée libre (4) afin de supporter le rotor d'une machine lorsque le palier est fixé à la machine.

2. Palier à feuilles selon la revendication 1, dans lequel le support interne (2) contient huit feuilles rectilignes (3).

3. Palier à feuilles selon la revendication 1 ou 2, dans lequel les supports interne et externe sont en acier doux ou en alliages métalliques qui peuvent supporter des températures élevées.

4. Palier à feuilles selon la revendication 1, 2 ou 3, dans lequel les feuilles rectilignes sont en alliage quelconque qui est flexible et peut supporter des températures élevées.

5. Palier à feuilles selon la revendication 4, dans lequel les feuilles sont en alliage Be-Cu.

6. Procédé de fabrication d'un palier à feuilles pour fournir un support pour un rotor à grande vitesse, comprenant :
a. la fabrication d'un support interne (2) et d'un support externe (1) à la taille exigée;
b. la formation de fentes (5) sur le support interne (2) en fonction du nombre de feuilles (3) à incorporer dans le support (2), les fentes (5) étant inclinées par rapport à une direction radiale respective;
c. l'insertion d'une extrémité d'une feuille flexible (3) qui reste rectiligne sur sa longueur complète directement dans une fente respective (5), l'autre extrémité de ladite feuille flexible rectiligne (3) étant laissée libre (4) afin de supporter le rotor d'une machine lorsque le palier est fixé à une machine;
d. le chauffage du support externe (1) et l'encapsulage du support interne (2) conjointement avec les feuilles rectilignes dans le support externe chauffé (1);
e. l'application de la pression résultant de l'étape (d) au-dessus de l'ensemble; et
f. la découpe des bords de l'ensemble à la dimension exigée.

7. Procédé selon la revendication 6, dans lequel les supports interne et externe sont en acier doux ou en alliages métalliques pouvant supporter de hautes températures et le support interne contient huit feuilles rectilignes.
